(19) Europäisches Patentamt / European Patent Office / Office européen des brevets

(11) **EP 1 957 957 B1**

(12) **EUROPEAN PATENT SPECIFICATION**

(45) Date of publication and mention
of the grant of the patent:
**06.05.2009 Bulletin 2009/19**

(51) Int Cl.:
***G01N 17/04*** (2006.01)

(21) Application number: **06847489.9**

(22) Date of filing: **27.11.2006**

(86) International application number:
**PCT/US2006/045342**

(87) International publication number:
**WO 2007/064567 (07.06.2007 Gazette 2007/23)**

(54) **APPARATUS AND METHOD FOR MEASURING REAL-TIME CORROSION**

VORRICHTUNG UND VERFAHREN ZUR MESSUNG VON ECHTZEIT-KORROSION

DISPOSITIF ET PROCEDE PERMETTANT DE MESURER LA CORROSION EN TEMPS REEL

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.11.2005 US 290671**

(43) Date of publication of application:
**20.08.2008 Bulletin 2008/34**

(73) Proprietor: **GENERAL ELECTRIC COMPANY**
**Schenectady, NY 12345 (US)**

(72) Inventors:
• **CHEN, Weiguo**
**Shanghai 201203 (CN)**
• **ZHANG, Yu**
**Shanghai 200233 (CN)**
• **HE, Gaorong**
**Shanghai, China 200127 (CN)**
• **ALLISON, Peter, Sam**
**Conroe, TX 77306 (US)**
• **GU, Yikang**
**Shanghai 201203 (CN)**
• **CHEN, Yao**
**Shanghai 200062 (CN)**
• **CAI, Wei**
**Pudong, Shanghai 201203 (CN)**
• **LASIUK, Brian, Walter**
**Waukesha, WI 53188 (US)**
• **WANG, Shengxian**
**Shanghai 200439 (CN)**
• **WEI, Chang**
**Niskayuna, NY 12309 (US)**

(74) Representative: **Bedford, Grant Richard**
**GE**
**London Patent Operation**
**15 John Adam Street**
**London WC2N 6LU (GB)**

(56) References cited:
WO-A-00/34759          WO-A-02/073169
US-A- 6 132 593        US-A1- 2005 075 800

## Description

### BACKGROUND OF THE INVENTION

The invention relates generally to a corrosion detector and methods for detecting both general corrosion and localized corrosion on the same sensor or coupon.

Various industrial processes involve corrosive fluids and processes. Such an environment degrades and corrodes industrial equipment, including piping, vessels, heat exchangers, *etc.*, which in turn increases production costs, creates delays, increases maintenance costs, and compromises safe operations. In order to mitigate such issues, corrosion monitoring is a valuable tool.

At present, degradation and corrosion are estimated using various conventional techniques. In one example, corrosion coupons are exposed to a corrosive environment to measure real corrosion on machine components, such as fluid vessels. Such coupons are inspected and analyzed periodically, typically monthly. This technique quantifies the general corrosion rate by measuring the weight loss of the coupons due to corrosion, and normalizes the weight loss per unit time. The corroded coupons are also examined under a microscope to determine the depths of any pits or "localized corrosion". This method is labor intensive and provides poor means to correlate episodic corrosion with upsets in real time.

Another conventional technique is to measure the change in electrical resistance of a wire or sensor. Corrosion processes cause a degradation of material, and for metal piping and vessels, which translates into a loss of metal. This loss of metal affects the resistance in a defined manner.

In another conventional technique known as linear polarization resistance (LPR), the polarization resistance of a corroding electrode is measured to determine the corrosion current, which is a direct measure of the corrosion rate. A low electrical potential in the order of 10 - 20 mV is applied across a corroding sensor element and the resulting induced current is measured. The polarization resistance is calculated based on the potential and current, which is regard as the inverse to the uniform corrosion rate. The linear polarization resistance technique does not measure the degradation of the pipe wall or vessel directly and requires assumptions of material constants as well as constant temperature in the environment, which introduces uncertainties into the measured corrosion rate and amount.

Another conventional technique is electrochemical noise measurement, which is typically used in fluid environment to measure localized corrosion. This technique senses changes in the localization random bursts of current or potential occurring during the corrosion process.

None of these conventional techniques provides reliable monitoring of general and localized corrosions in real time. Hence, there remains a need for improved techniques.

### BRIEF DESCRIPTION OF THE INVENTION

Accordingly, the present invention provides corrosion sensors or coupons, and methods of measuring both general and local corrosions in a single sensor.

The present invention also provides sensors and methods for measuring general and local corrosions in real time. As used herein, "real time" includes measuring corrosions continuously and/or continually at predetermined time periods, e.g., every minute, every $n^{th}$ minutes, every hour, everyday, etc.

An inventive sensor is adapted to ascertain general and local corrosions. The sensor comprises at least one characteristic impedance corrosion element capable of conducting electrical current and a plurality of electrodes distributed on the corrosion element. The impedance of a segment of the corrosion element measured between two predetermined electrodes relates to the corrosion on that segment, and the impedances of the segments are compared to distinguish between general and local corrosions.

The corrosion element(s) can be linear or nonlinear, e.g., serpentine or spiral, and may have varying cross-sectional area.. The corrosion element can be embedded in an electrically insulated material. The corrosion element has at least one dimension commensurate with a pitting dimension characteristic of a predetermined metallurgy. The sensor may be disposed on a MEMs chip, and a field central unit may communicate with each chip wirelessly.

The characteristic impedance can be electrical resistance or reactive impedance, which includes both capacitance and inductance. The corrosion element can also be substantially a two-dimensional element.

At least one surface of the corrosion element may have a roughness substantially similar to the roughness of an inner surface of a vessel where the sensor is deployed. Another corrosion element may have its surface roughness increased. One corrosion element or sensor can be deployed as a reference sensor exposed to similar environmental conditions as the measuring sensors, but not to the corrosive fluids.

### BRIEF DESCRIPTION OF DRAWINGS

These and other features, aspects, and advantages of the present invention will become better understood when the following detailed description is read with reference to the accompanying drawings in which like characters represent like parts throughout the drawings, wherein:

 FIG. 1 is a schematic illustration of the changes in impedance as a function of the surface of the sensor.
 FIG. 1A is a schematic illustration of an exemplary impedance circuit having a resistance, a capacitance and an inductance suitable for use with the present invention.

FIG. 2 shows a simplified schematic of a linear resistive corrosion sensor for detecting both general corrosion and localized corrosion constructed in accordance with an embodiment of the invention. FIG. 2A is an alternative arrangement of the sensor shown in FIG. 2. FIG. 2B is a two-dimensional alternative embodiment.

FIG. 3 shows a serpentine shaped corrosion sensor for detecting both general corrosion and localized corrosion constructed in accordance with an embodiment of the invention.

FIG. 4 shows a swirl-shaped corrosion sensor for detecting both general corrosion and localized corrosion constructed in accordance with an embodiment of the invention.

FIG. 5A shows another arrangement of the serpentine sensor of FIG. 3. FIG. 5B is a top view of a portion of the linear resistive corrosion sensor isolated from FIG. 5A showing an idealized local corrosion. FIG. 5C is a side view of FIG. 5B. FIG. 5D is a schematic representation of the sensor in FIGS. 5B and 5C as an equivalent electrical circuit. FIG. 5E is an idealized graph of resistance and depth of local corrosion.

FIG. 6A shows a cross-sectional view of a total integrated corrosion sensor on a chip, including the sensing element and electronics constructed in accordance with an embodiment of the invention. FIG. 6B shows a bottom view of FIG. 6A along with schematic circuit components.

FIG. 7 is a schematic view of the sensor shown in FIGS. 6A and 6B deployed in a pipe.

FIG. 8 is a schematic view of a central controller or CPU in field use with a plurality of the corrosion sensor chips shown in FIGS. 6A and 6B.

FIG. 9A is a graph illustrating the aspect ratio of pit changes as a function of the base metal. FIG. 9B is a graph illustrating the sensitivity of a sensor of the present invention and sample sensor after field deployment.

## DETAILED DESCRIPTION OF PREFERRED EMBODIMENTS

One aspect of the invention relates to a corrosion sensor having the capability of detecting at least two different types of corrosion, when placed within, in contact with, or in proximity to a target system or apparatus for which corrosion detection and/or analysis is desired. The inventive sensor is capable of detecting general corrosion as well as local or localized corrosion, as discussed further below. While the target system can be made from any materials, a typical target system includes, but is not limited to metal pipes, vessels, containers, heat exchangers, etc. through which a corrosive fluid runs/circulates.

The fluid in the target system may cause damage to the system via chemical means (e.g., corrosion) or mechanical damage (e.g., erosion). In some embodiments, these conditions can include, but are not limited to, increased/decreased pressure, increased/decreased temperature, relatively high/relatively low flow rate, and the like, and combinations thereof. The corrosive fluid is typically aqueous, and most often predominantly water. However the corrosive fluid can also include any liquid (s), gas(es), or combination(s) thereof. In addition, in some embodiments, the corrosive fluid may contain heterogeneous components, such as certain solid particles, colloids, or the like. For example, the corrosive fluid can be water, hydrocarbons, organic solvents, or the like, or combinations thereof. Water can include, e.g., waste water, purified water, tap water, an aqueous salt solution such as saline or ocean water, or the like. Hydrocarbons can, in some embodiments, include mixtures with organic compounds, e.g., oil/petroleum reactants, intermediates, and/or by-products.

Industrial vessels and pipes are typically made from metals or metal alloys, e.g., copper, copper alloys, iron alloys such as steels, nickel alloys, inconels, titanium, titanium alloys, aluminum, aluminum alloys, magnesium alloys, chromium alloys, cobalt alloys, tantalum alloys, tungsten alloys, zinc alloys, zirconium alloys, or the like, or combinations thereof. The pipes and vessels in the target can alternately be made from non-metallic materials or combinations of metallic and non-metallic materials.

In a preferred embodiment, at least a portion of the corrosion sensor, and specifically the sensing element has a substantially similar chemical composition to that of the pipes or other fluid-contacting surface of the target system. In any event, the corrosion sensor can advantageously be made from any of the metals or alloys described above. Preferably the sensing elements have a similar surface finish as the pipes or fluid contacting surfaces of the target systems. This ensures that similar corrosive attacks will occur on the target system as on the sensor.

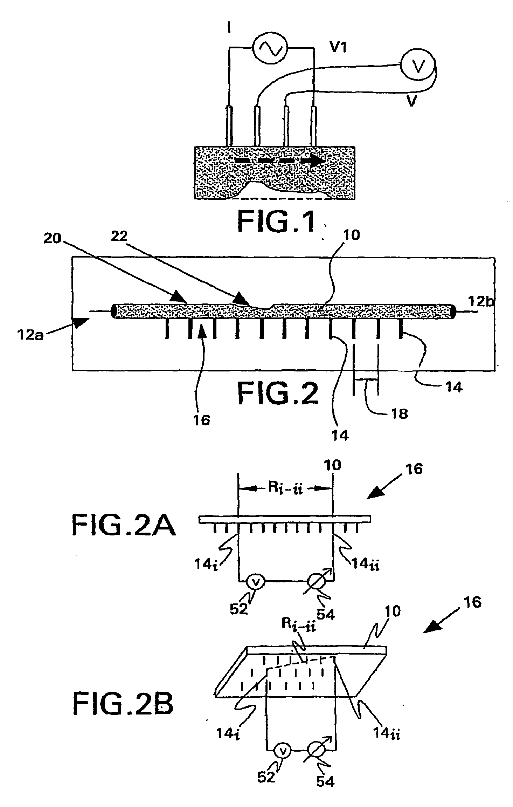

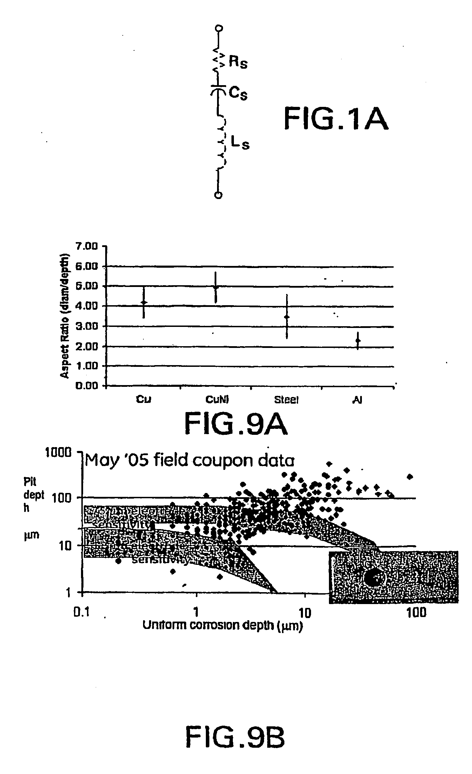

When a metallic surface of a pipe, a vessel or a sensor is corroded, its sheet resistance or impedance changes as a function of the geometry of the surface as illustrated in FIG. 1. The changes in resistance can be quantified in accordance to the following equation:

$$R_s = \frac{\pi}{\ln 2} \frac{V_1 + V_2}{I} f\left(\frac{V_1}{V_2}\right)$$

$$f(V_1 / V_2) \quad \text{Van Der Pauw correction factor}$$

This equation can be generalized to account for the more general circuit impedance via:

$$Z_s = \frac{\pi(V_1 + V_2)}{\ln 2\, I} f(\frac{V_1}{V_2})$$

Where $R_s$ is the resistance (and $Z_s$ is the impedance) across the pre-selected segment; $V_1$ and $V_2$ are the voltage across the same segment; and I is the current through same, as schematically depicted in FIG. 1. The voltage can be either direct current or alternating current. Experiments have shown that the changes in resistance are measurable in the milli-ohm range using standard equipment. The present invention is described below with the change in the resistive properties of the circuit; however, the same principles also apply to the reactive component of the sensing element impedance, as someone skilled in the art would realize. As all components of the impedance, resistive or reactive, are a function of the geometry of the electrodes, any process which alters the shape, spacing, orientation, etc. of the electrodes will affect the impedance. A generalized circuit is shown in Fig. 1A and governed by the following equation:

$$Z = R_s + j(\omega L_s - \frac{1}{\omega C_s})$$

where Z is the impedance, $R_s$ is the circuit resistance, $L_s$ is the circuit inductance, $C_s$ is the circuit capacitance, and $\omega$ is the angular frequency.

As mentioned above, both general corrosion and localized corrosion can be measured on a single sensor. General corrosion generally is widespread and occurs on a relatively large scale or relatively large area. General corrosion is relatively uniform on the surface of a pipe or vessels in the target system, or on a sensor. General corrosion damages and removes metal mass, which changes the geometry, *i.e.*, thickness of the surface, and causes a degradation or depletion of original material. General corrosion compromises the structural rigidity and integrity of a pipe or vessel. Exemplary general corrosion can include, but is not limited to, large-scale surface oxidation, e.g., to form metal oxides. On the other hand, localized corrosion may be widespread or limited to only a few areas of the target system, but generally is relatively non-uniform and occurs on a relatively small scale. Exemplary localized corrosion can include, but is not limited to, pitting, environmental stress cracking (ESC), (hydrogen) embrittlement, and the like, as well as combinations thereof.

Simultaneous measurement of general corrosion and localized corrosion on a single sensor can be accomplished with a linear resistive corrosion system, such as the one shown in Fig. 2. Fig. 2 shows corrosion sensor 1 comprising linear resistive corrosion element 10, leads 12a, 12b, and measuring rods or electrodes 14 (hereinafter electrodes 14). Corrosion element 10 can exhibit both general corrosion 20 and localized corrosion 22 in the form of pitting 22. The sensor leads 12a, 12b connect corrosion element 10 to an electrical power source (AC or DC) to supply electrical power to sensor 1. The plurality of electrodes 14 are arranged in a linear array and are in electrical contact with corrosion element 10 and extend generally away from corrosion element 10. A segment or unit of corrosion element 10 between adjacent pairs of electrodes 14 is designated as segment 16. Preferably, electrodes 14 comprise relatively thin wire conductors so that the amount of electrical power drawn away from corrosion element 10 is minimized. Spacing 18 between adjacent electrodes 14 along corrosion element 10, also known as pitch 18, is selected to be about the same as the characteristic dimension of the expected localized corrosions for the particular metallurgy. The different aspect ratio of pitting in different metallurgies is shown in Fig. 9A.

When electricity is passed through the corrosion element 10 via sensor leads 12a and 12b, one or more electrical properties, preferably the resistance of each segment 16 described by the above equation, can be measured between pairs of electrodes 14, collectively denoted by $R_i$, where i ranges from 1 to (n-1), where n is the number of electrodes arranged on corrosion element 10. In other words, for n numbers of electrodes, there are n-1 numbers of segments 16 whose resistances are measurable.

The pairs of measured electrodes 14 may be adjacent to one another, but non-adjacent electrodes may also be used to vary spacing or pitch 18. In other words, spacing 18 can be varied by selecting electrodes for measurements, e.g., adjacent electrodes, every other electrode, every third electrode, *etc.* or random electrodes.

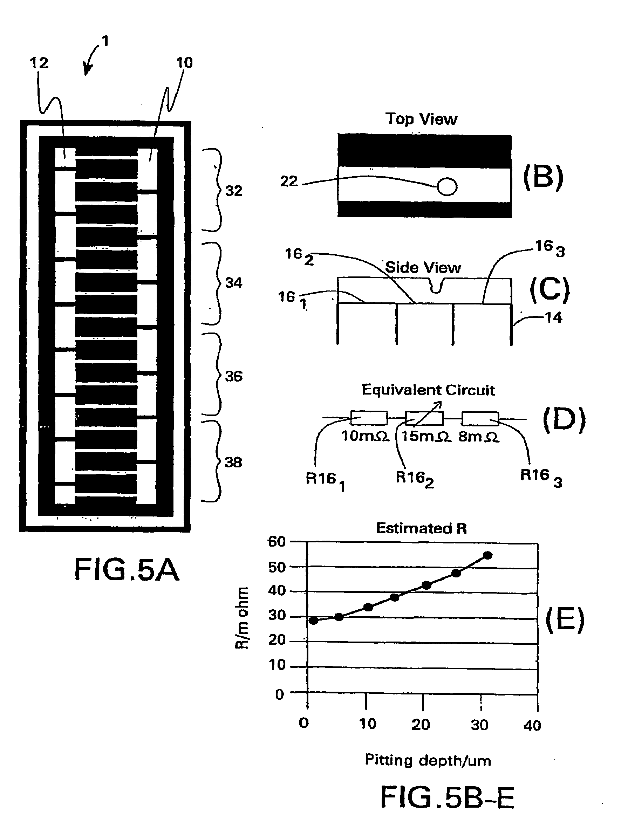

For example, the resistance of corrosion element 10 can be measured by applying a known DC or AC current through sensor leads 12a and 12b and measuring the resulting voltage across pairs of electrodes 14. Alternatively, a known DC or AC voltage can be applied to leads 12a and 12b and the current through segments 16 of corrosion element 10 can be measured. The impedance along the entire corrosion element 10, *i.e.,* at each segment 16, can be ascertained. Before any corrosion occurs on corrosion element 10, the initial resistance $R_o$ should be substantially the same, for any segment 16 on corrosion element 10. At a given time t after corrosion element 10 is immersed in a corrosive fluid, any corrosion that occurs reduces the cross-sectional area of corrosion element 10, and increases resistance in the electrode where the corrosion occurred, as discussed further below and shown in FIGS. 5B-5E.

The multiple impedance values of segments 16 between corresponding pairs of electrodes 14 at any given time, individually denoted as $R_i(t)$, can be used for corrosion analysis or can be compared to the pre-corrosion $R_o$ to get a differential value, $\Delta R_i(t)$, for corrosion analysis. Alternately, a reference sensor $1_{ref}$ (not shown), containing a substantially similar conductive element $10_{ref}$ (not shown), can be embedded in an insulating substrate isolating the reference sensor from the corrosive environment but exposing it to similar environmental conditions, such as temperature and pressure, as the measuring sensor. This reference sensor $1_{ref}$ can provide a noncorrosive $R_x(t)$ value for comparison to $R_i(t)$. $R_x(t)$ should be the same as or is substantially similar to the pre-corrosion $R_o$, when environmental conditions between the pre-corrosion environment, when $R_o$ is measured and the corrosive environment, when $R_x(t)$ is measured, are similar. Otherwise, the difference between $R_x(t)$ and $R_o$ can be indicative of such conditions, *e.g.*, temperature drift. In this manner, temperature drifts can be corrected for more accurate readings. Alternatively, a thermocouple can be added to the sensor to directly measure the temperature of the sensor.

Either value, $\Delta R_i(t)$ or $R_i(t)$, for each segment 16 can be plotted on the y-axis of a time-slice histogram or bar graph, for example, with the x-axis representing the position of segments 16 along the length of corrosion element 10. If $R_i(t)$ is used, $R_o$ or $R_x(t)$ may also be plotted as a horizontal line on the histogram for comparison. General corrosion 20 can be ascertained in two manners. General corrosion can be indicated by relatively small differences between $R_i(t)$ and $R_o$ or $R_x(t)$, or a uniform change between the electrode pairs. Localized corrosion 22 is typically indicated by relatively large differences between $R_x(t)$ and $R_o$ or $R_x(t)$, or changes in only specific, discrete electrode pairs. Because resistance is a function of the cross-sectional area of segment $16_i$ between the $i^{th}$ and $(i+1)^{th}$ electrodes 14, the presence of localized corrosion 22 between the $(i+1)^{th}$ and the $i^{th}$ electrodes means a smaller cross-sectional area in segment $16_i$ therebetween and thus a higher measured resistance. In other words, localized corrosions can be detected by relatively higher resistance $k_i(t)$ at one or more segments 16 when compared to other $R_i(t)$ values at other segments 16. On the other hand, general corrosion can be detected by more widespread increase of resistance along a higher number of segments 16.

Additionally, a single incidence of localized corrosion 22 may significantly reduce the ability of electricity to flow through that localized corrosion, if that local corrosion substantially reduces or cuts through the thickness of corrosion element 10. This produces a very strong signal that the corrosion has completely eroded the depth of the electrode.

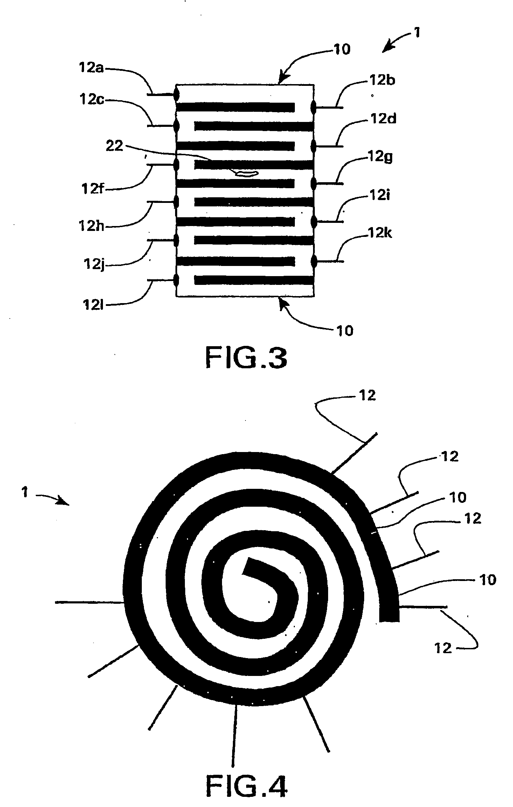

Fig. 3 shows a top view of a serpentine variation of corrosion sensor 1 in Fig. 2. Here, the linear resistive corrosion element 10 is formed into a two-dimensional serpentine pattern on an electrically insulating substrate 30. The insulating substrate 30, should extend into the spaces between the serpentine pattern of corrosion element 10 to ensure that electricity flows along the length of corrosion element 10 and that no electrical short occurs. In this embodiment, there is a plurality of sensor leads, 12a, 12b, 12c, *etc.*, present to minimize the potential problem of localized corrosion isolating or cutting through corrosion element 10. For example, if the corrosion element 22 shown between leads 12f and 12g is corroded through, the rest of the sensor can still be supplied with electricity through leads 12a-12f and 12g-121, *etc.* Not shown from the perspective in Fig. 3 are the plurality of electrodes 14 oriented in the direction normal to the plane as shown. The serpentine pattern also minimizes the space required to contain a desired length of corrosion element 10, and also provides a 2-D sensor while employing a linear element.

Fig. 4 shows a 2-D swirl-shaped variation of corrosion sensor 1 in Fig. 2. Here, the corrosion element 10 is formed into a two-dimensional spiral pattern on an insulating substrate 30 (not shown). As in Fig. 3, electrodes 14 (not shown) electrically connected to the corrosion element 10 are oriented generally in the direction normal to the plane as shown. Sensor leads 12 are also connected to corrosion element 10 to supply AC or DC electricity.

The dimensions of the corrosion element(s) 10, such as cross-sectional area, can advantageously be tailored to the characteristic dimensions of corrosion in the target system as well as the dynamic range of the sensor, as previously described above in the graph showing different aspect pitting ratios for different materials. The dimensions typically depend upon the specific materials in the target system, the corrosive fluid present during the duration of the corrosion detection/analysis and the type of flow, *e.g.*, laminar or turbulent, in the target system, and the amount of corrosion that is expected. By varying the cross-sectional area of multiple corrosion elements 10, as in the sensor of Fig. 5A, the characteristic dimensions of localized corrosion, for example, can be determined. This can be accomplished by several methods. One involves estimating the size of localized corrosion events in the long term by accelerating the corrosion rate of the system, e.g., by increasing temperature and/or by increasing the concentration of a particularly corrosive component of the fluid. This necessarily requires the use of a side-stream sampling device. Another involves extrapolating the long-term size of localized corrosion events from abbreviated measurements of real-time corrosion by the corrosive fluid under operating conditions. The expected dimensions of localized corrosion events in the long-term are related to the size of corrosion element(s) 10.

In one embodiment, spacing 18 of segment 16 between electrodes 14, and the size and shape of the electrodes are on the order of the typical dimensions of localized corrosion, and the dynamic range required or the measurement. Typical corrosion rates in industrial systems are shown in Fig. 9B, overlaid with sensitivity bands of different electrode geometries. Fig. 9B shows real sensor data from field deployments. The sensitivity of the sensor can be selected by choosing the appropriate electrode geometry.

The total number of electrodes 14 electrically connected to the corrosion element(s) 10 can vary, *e.g.*, based on the spacing 18 and on the length L of the corrosion element(s) 10, or more generally on the absolute size of the corrosion sensor 1. In general, there is no limit to the number of electrodes that can be deposited on a smart coupon. However, for practical devices to be deployed in a nominal 1-2" diameter pipe, moderate power consumption to be achieved, and a good statistical sampling of many electrodes to disentangle local and general corrosion, 16 electrodes are the preferred embodiment. In other embodiments, the corrosion sensor 1 includes from about 3 to about 250 electrodes, preferably about 3 to about 100 electrodes, and more preferably about 5 to about 20 electrodes. However, any number of electrodes can be used.

Referring again to Fig. 5A, corrosion sensor 1 comprises a plurality of corrosion elements 10 having varying cross-sectional areas, and each is disposed between pairs of electrodes 12 as shown. In this example, corrosion elements have varying or progressing cross-sections 32, 34, 36, 38 with cross-section 32 being the smallest and cross-section 38 being the largest. In one embodiment illustrated by Fig. 5A, sensor leads 12 supply the electrical power, as well as measuring the resistance $R_s$ in each corrosion element. As corrosion attacks the corrosion elements 10, the ones with the smallest cross-sectional areas, *i.e.*, 32, would be cut-off first, *i.e.*, can no longer conduct electricity or its resistance is too high or approaching infinity. As the corrosion continues, corrosion elements 10 should progressively stop conducting electricity in direct relation to the size of their cross-section area. Hence, when corrosion element(s) 10 with cross-sectional area 32 stops conducting electricity, then the size of the corrosion is substantially the same as cross-sectional 32. When corrosion element(s) 10 with cross-sectional area 34 stops conducting electricity then the corrosion is substantially that size, and so on. In this example of the sensor in Fig. 5A, electrodes 14 are optional, since sensor leads 12 can be used both to provide electrical power and to measure current and voltage. The cross-sectional area of corrosion elements 10 also affects the resistance of the corrosion elements, i.e., smaller cross-sectional area, would yield higher measured resistance.

In another embodiment also illustrated by Fig. 5A, corrosion elements 10 are used with electrodes 14 (not shown) similar to that in Fig. 2. A portion of corrosion element 10 with local corrosion 22 is enlarged and shown in Figs. 5B and 5C. As the local corrosion 22 occurs, the cross-sectional area of corrosion element 10 is reduced. One way of ascertaining the size and/or location of corrosion 22 is illustrated in Figs. 5C and 5D. This portion of corrosion element 10 is divided, for example, into 3 segments $16_1$, $16_2$ and $16_3$ between electrodes 14, with local corrosion 22 located in segment $16_2$. The resistance of each segment 16 is represented schematically in Fig. 5D by an equivalent electrical circuit. The resistance of segments $16_1$ and $16_3$, *i.e.*, R-$16_1$ and R-$16_3$, are constant or relatively constant with no local corrosion occurring thereon. The resistance of segment $16_2$, *i.e.*, R-$16_2$, is varying since the size of the corrosion is increasing with time. Also, R-$16_2$ is higher than R-$16_1$ and R-$16_3$ due to the reduced cross-section caused by corrosion 22. The graph shown in Fig. 5E schematically represents the increase in resistance as the depth of the corrosion increases.

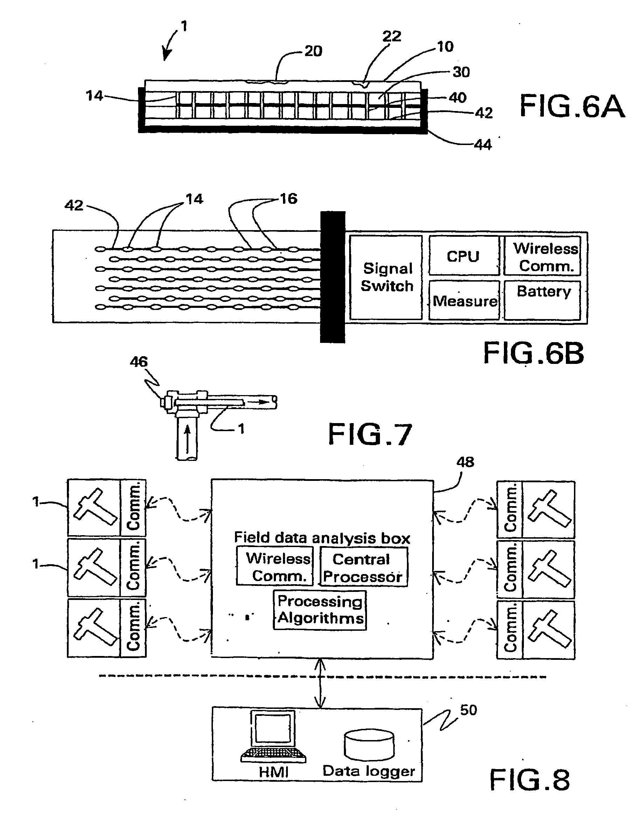

FIG. 6A and 6B illustrate another embodiment where the corrosion element(s) 10 are integrated with the acquisition, processing, and communications electronics on a chip in a micro-electro-mechanical (MEMs) system. As shown, sensor 1 comprises corrosion element(s) 10 disposed on top showing corrosions 20, 22. A plurality of electrodes 14 connects the corrosion element(s) 10 to the CPU and other circuitries via top electrical connecting layer 40 and bottom electrical connecting layer 42, as known in the art. As shown in FIG. 6B, the processing and communicating modules include, but are not limited to, a central processing unit (CPU), a measuring module (including voltmeter, ohmmeter and/or amp meter), a signal switch to select a particular corrosion element 10 to measure, a battery and a wireless communication module, preferably employing radio frequency signals, e.g., RFID technology. The sensor leads can be designed such that each lead is an active element in a resonant circuit, each responds to a specific frequency. When corrosion occurs at the surface of the senor leads, the specific resonant frequency or its amplitude changes, this change is then detected by a receiver ( mounted distantly outside the pipe). The receiver is also a radio wave generator so that the sensor leads do not need power. A series sensor leads can also be designed to respond to a series of resonant frequency, therefore the corrosion profile can be obtained by correlating the extent of corrosion to the resonant frequencies. An anti-corrosion coating, or housing, 44 is applied to protect the electrodes and circuitry from corrosion.

It is important to note that the small MEMs sensing elements may be of similar construction to those previously describes or the electrodes may be deployed on a sheet of material. As such the electrodes measure and map the changes in the sheet current, rather than the current flowing in discrete electrodes. The technique and device that this type of sensor is based on is described in United States patent no. 6,922,641. This sensor is also known in the art as "RCM on a chip".

An exemplary deployment of corrosion sensor/chip 1 is shown in FIG. 7. An exemplary location includes corners or bends, where the flow can be turbulent, but there is no barrier to deploying the sensor in any location that is commensurate with accommodating its physical envelope. Sensor/chip 1 is attached to pipe plug 46 such that sensor 1 is in the flow stream. The processing and communicating modules can be reused and are preferably embedded in plug 46. Due to the wireless communication capability, a plurality of corrosion sensors/chips 1 can be deployed wirelessly. Each sensor/chip can communicate with data analysis module 48 in the field, as shown in FIG. 8. In addition to the ability to communicate wirelessly, field module 48 may have its own CPU and data processing modules, as shown. Field module 48 may be connected to a remote module 50, which may include computers and data logger or data storage, via the Ethernet or LAN connections.

As discussed above, the surface finish of the sensing element should be similar to that of the metallurgy of the target system. Preferably, sensors are deployed in pairs, i.e., an ideal, suitably polished sensor similar to that of the target system, and another sensor which has the active element slightly abraded. Such a marred or imperfect coupon would tend to corrode or be subject to a corrosive attack on shorter time scales than a nominal coupon, because localized corrosive attacks generally commence when the protective surface oxide layer(s) is broken and a direct attack on the base metal can be initiated. As such, a nominal sensor, much like a pipe or vessel wall have to have the protective surface layers degraded before a corrosive attack on the base metal can commence. This would under estimate the corrosion rate should there be physical defects in the pipe or vessel due to mechanical such as scratching, marring, or any physical damage during fabrication, transportation, installation, etc. of the vessel or piping. By deploying a marred or imperfect coupon that already has some surface damage where the protective oxide coating is compromised, a more rapid attack can be measured. Therefore, the measurements of this pair of coupons would provide a range of corrosion attacks that may be occurring in the system, including a worst case (*i.e.* protective oxide films compromised) and a best case (*i.e.* protective oxide film is not compromised). A reference sensor, described above, can also be deployed with such pair.

Since the sensor and associated processing electronics is small, it can be deployed in numerous locations, as well as embedded into the infrastructure itself. That is, it can be placed into the substrate or wall of the pipe or vessel, and become part of the infrastructure itself. In other words, the sensor can be embedded into a pipe or vessel material without requiring additional machinery to fix it within the pipe or vessel.

Depending upon the desired electrical property(ies) to be measured and/or analyzed and upon the power supply available, direct current and/or alternating current may be supplied through the sensor leads 12. Whatever power is supplied through the sensor leads 12, it may include a (DC) component and/or a variable or periodic (AC) component. Examples of possible power supplied may include, but is not limited to, a sinusoidal voltage/current having a relatively constant maximum amplitude and frequency, a square or ramping wave of voltage/current having a relatively constant maximum amplitude and frequency, a sinusoidal voltage/current having changing frequency/periodicity, a square or ramping wave of voltage/current having changing frequency/periodicity, a sinusoidal voltage/current having changing amplitude, a square or ramping wave of voltage/current having changing amplitude, or the like, or any combination and/or repeating pattern thereof. As commonly available electrical sources, such as industrial electric power and/or batteries, are typically used to supply power to sensor leads 12, sensor leads 12 may take the form of electrodes and/or hard wires connected to sensor element(s) 10. Nevertheless, other power sources, such as induction coils for creating/focusing magnetic fields and circuits for converting radio frequencies into electric current/voltage, are contemplated for supplying power to sensor leads 12.

Electrically insulating substrate 30 may include, but is not limited to: dielectric materials such as metal oxides, metal nitrides, metal oxynitrides, SiLK, or the like; non-conductive polymer resins such as epoxy resins, phenolic resins, poly(alphaolefin)s (particularly those that have relatively high crystallinity, such as HDPE, i-PP, and the like), partially or completely halogenated poly(alpha-olefin)s (e.g., PVC, PVDC, PVDF, PTFE, FEP, poly(perfluoroacrylate)s, or the like, or mixtures or copolymers thereof), polysulfones, polyimides, melamine resins, alkyd thermoset resins, or the like, or mixtures or copolymers thereof; reinforcing agents such as non-conductive or semi-conducting fibers; permeation/diffusion modifiers, *e.g.*, intercalated clays such as optionally modified montmorillonites and the like; other non-conductive or semi-conducting fillers; and the like; and mixtures thereof.

In an alternative embodiment shown in FIG. 2B, each of the plurality of electrodes 14 - can itself function as a sensor lead 12. Any two electrodes $14_i$ and $14_{ii}$ can be selectively connected to a power source 52. Measuring device 54 can be included in the circuit to measure the current or voltage or both. A resistive value $R_{i-ii}$ between electrodes $14_i$ and $14_{ii}$ can be ascertained. In another embodiment shown in FIG. 2B, sensor 1 comprises a two-dimensional rectangular corrosive element 10 having a plurality of electrodes 14 dependent therefrom as shown in Fig. 10. In this case, all electrodes are electrically connected to each other at or by corrosion element 10. Any two electrodes $14_i$ and $14_{ii}$, including adjacent

electrodes can be selectively connected to power source 52 and meter 54. In the embodiments shown in Figs. 2A and 2B, if all adjacent pairs of electrodes 14 are measured, general and local corrosions can be ascertained as described above. Any random pairs of rods 14 can be interrogated to yield information about any region of interest.

Another aspect of the present invention relates to a method for real-time detection of at least two different types of corrosion (*e.g.*, general corrosion such as surface metal oxidization and localized corrosion such as pitting) using at least one corrosion sensor 1, as described above.

In one embodiment, the inventive method includes the steps of: providing at least one corrosion sensor 1, as described above, which contains one or more corrosion elements 10, sensor leads 12, electrodes 14 disposed on the corrosion elements 10, and an optional insulating substrate 30; providing at least one power source for providing power to the sensor; electrically dividing corrosion elements 10 into segments 16 between predetermined pairs of electrodes 14; and collecting, manipulating, interpreting, monitoring, transmitting, and/or storing data regarding the resistance of segments 16 to ascertain information relating to the general and local corrosions. This method also provides a real-time corrosion profile.

In addition, capturing/sampling (collection) of various corrosion data either constantly or at repeated/regularly-spaced times/time intervals can yield increased corrosion information about the target system and corrosive fluid environment. Such a corrosion detection system is an improvement compared to having a field engineer manually inspect corrosion coupons and determine weight loss, typically not more often than once per month.

The previously described embodiments of the present invention have many advantages, which may include, but are not limited to, any one or more of the following:

• the collection, monitoring, and/or storage of corrosion data for transmission, manipulation, and/or interpretation remotely from the target system site allows for a determination of corrosion mode without visual inspection;

• data sampling at arbitrary times, or data sampling at repeated/regularly-spaced times/time intervals offers real-time corrosion information and history, which allows direct correlation of corrosion events with critical target system events (independent or integrated monitoring); and

• increased capability for measurement accuracy/precision, as what is being measured is the change in one or more electrochemical properties of the conductive sensor element(s) on the substrate, allowing a direct correlation with corrosion behavior; in some cases in the prior art, only the properties of corrosive fluid environment, such as with electrochemical noise (ECN) techniques, only allowing indirect correlation with corrosion behavior.

**Claims**

1. A sensor (1) comprising processing and communicating modules adapted to ascertain general and local corrosions comprising at least one characteristic impedance corrosion element (10) capable of conducting electrical current and a plurality of electrodes (14) distributed on the corrosion, element, wherein an impedance of a segment (16) of the corrosion element (10) measured between two predetermined electrodes relates to the corrosion on said segment, and wherein the impedance of each segment in comparison to the impedance in other segments (16) are measured to distinguish between general and local corrosions.

2. The sensor (1) of claim 1, wherein the corrosion element (10) is substantially linear.

3. The sensor (1) of claim 2, wherein the corrosion element (10) is arranged in a nonlinear pattern.

4. The sensor (10) of claim 3, wherein the corrosion element (10) is arranged in a serpentine or spiral fashion.

5. The sensor (1) of claim 1, comprising a plurality of corrosion elements (10) having varying cross-sectional dimension.

6. The sensor (1) of claim 1, wherein the characteristic impedance comprises electrical resistance or reactive impedance.

7. The sensor (1) of claim 6, wherein the corrosion element (10) is embedded in an electrically insulated material, so that the resistive corrosion element does not contact itself electrically.

8. The sensor (1) of claim 1, wherein at least two sensor leads (12a,12b) are connected to the corrosion element to provide electricity to the sensor.

9. The sensor (1) of claim 1, wherein the sensor (1) is disposed on a chip.

10. The sensor (1) of claim 1, wherein the corrosion element (10) has at least one dimension commensurate with a pitting dimension characteristic of a predetermined metallurgy.

11. The sensor (1) of claim 1, wherein at least one surface of the corrosion element (10) has a roughness substantially similar to the roughness of an inner surface of a vessel where the sensor is deployed.

12. The sensor (1) of claim 1, wherein at least one surface of the corrosion element (10) has its roughness increased.

13. An array of sensors accordance to claim 1, wherein the sensors (1) comprise different materials or different surface treatments to ascertain corrosion measurements having a wide dynamic range and multiple metallurgies.

14. The array of sensors of claim 13, wherein a first sensor (1) is a reference sensor and second sensor (1) is substantially similar to the first sensor, wherein the reference sensor is not exposed to the corrosive environment while the second sensor is exposed to the corrosive environment and wherein both sensors are exposed to substantially similar environmental conditions and the reference sensor compensates for environmental effects.

15. A method for determining a general corrosion and local corrosion comprising the steps of

(a) providing at least one sensor (1) of claim 1;
(b) collecting data regarding the impedance of all the segments (16); and
(c) comparing the impedance data to determine the general and local corrosions on said sensor (1).

**Patentansprüche**

1. Verarbeitungs- und Kommunikationsmodule aufweisender Sensor (1), der dafür eingerichtet ist, allgemeine und lokale Korrosionen festzustellen, der wenigstens ein für elektrischen Strom leitfähiges Korrosionselement (10) mit
charakteristischer Impedanz und mehrere auf dem Korrosionselement verteilte Elektroden (14) aufweist, wobei eine zwischen zwei vorbestimmten Elektroden gemessene Impedanz eines Segmentes (16) des Korrosionselementes (10) mit der Korrosion auf dem Segment in Beziehung steht, und wobei die Impedanz jedes Segmentes im Vergleich zu der Impedanz in anderen Segmenten (16) gemessen wird, um zwischen allgemeinen und lokalen Korrosionen zu unterscheiden.

2. Sensor (1) nach Anspruch 1, wobei das Korrosionselement (10) im Wesentlichen geradlinig ist.

3. Sensor (1) nach Anspruch 2, wobei das Korrosionselement (10) in einem nicht-geradlinigen Muster angeordnet ist.

4. Sensor (1) nach Anspruch 3, wobei das Korrosionselement (10) in einem serpentinen- oder spiralförmigen Muster angeordnet ist.

5. Sensor (1) nach Anspruch 1, welcher mehrere Korrosionselemente (10) mit verschiedener Querschnittsabmessung aufweist.

6. Sensor (1) nach Anspruch 1, wobei die charakteristische Impedanz einen elektrischen Widerstand oder eine reaktive Impedanz aufweist.

7. Sensor (1) nach Anspruch 6, wobei das Korrosionselement (10) in einem elektrisch isolierten Material eingebettet ist, sodass das resistive Korrosionselement keinen elektrischen Kontakt zu sich selbst herstellt.

8. Sensor (1) nach Anspruch 1, wobei wenigstens zwei Sensorleitungen (12a, 12b) mit dem Korrosionselement verbunden sind, um dem Sensor Elektrizität zuzuführen.

9. Sensor (1) nach Anspruch 1, wobei der Sensor (1) auf einem Chip angeordnet ist.

10. Sensor (1) nach Anspruch 1, wobei das Korrosionselement (10) wenigstens eine einer Lochfraßabmessungseigenschaft einer vorbestimmten Metallurgie entsprechende Abmessung hat.

11. Sensor (1) nach Anspruch 1, wobei wenigstens eine Oberfläche des Korrosionselementes (10) eine Rauhigkeit hat, die im Wesentlichen der Rauhigkeit einer Innenoberfläche eines Behälters dort entspricht, wo der Sensor eingesetzt wird.

12. Sensor (1) nach Anspruch 1, wobei wenigstens eine Oberfläche des Korrosionselementes (10) seine Rauhigkeit erhöht hat.

13. Anordnung von Sensoren nach Anspruch 1, wobei die Sensoren (1) unterschiedliche Materialien oder unterschiedliche Oberflächenbehandlungen aufweisen, um Korrosionsmesswerte mit einem breiten dynamischen Bereich und mehreren Metallurgien feststellen.

14. Anordnung von Sensoren nach Anspruch 13, wobei ein erster Sensor (1) ein Bezugssensor ist und wobei ein zweiter Sensor (1) im Wesentlichen dem ersten Sensor ähnlich ist, wobei der Bezugssensor nicht der korrosiven Umgebung ausgesetzt wird, während der zweite Sensor der korrosiven Umgebung ausgesetzt wird, und wobei beide Sensoren im Wesentlichen ähnlichen Umgebungsbedingungen ausgesetzt werden und der Bezugssensor Umgebungseffekte kompensiert.

15. Verfahren zum Ermitteln einer allgemeinen Korrosion und lokalen Korrosion mit den Schritten:

   (a) Bereitstellen wenigstens eines Sensors (1) nach Anspruch 1;
   (b) Sammeln von Daten bezüglich der Impedanz aller Segmente (16); und
   (c) Vergleichen der Impedanzdaten, um die allgemeinen und lokalen Korrosionen auf dem Sensor (1) zu ermitteln.

**Revendications**

1. Détecteur (1) comprenant des modules de traitement et de communication adapté pour identifier des corrosions générales et des corrosions ciblées comprenant au moins un élément (10) de corrosion à impédance caractéristique capable de conduire du courant électrique et une pluralité d'électrodes (14) réparties sur l'élément de corrosion, dans lequel une impédance d'un segment (16) de l'élément de corrosion (10) mesurée entre deux électrodes prédéterminées concerne la corrosion dudit segment, et dans lequel l'impédance de chaque segment par rapport à l'impédance des autres segments (16) sont mesurées pour faire la distinction entre des corrosions générales et des corrosions ciblées.

2. Détecteur (1) selon la revendication 1, dans lequel l'élément (10) de corrosion est sensiblement linéaire.

3. Détecteur (1) selon la revendication 2, dans lequel l'élément (10) de corrosion est disposé selon un schéma non linéaire.

4. Détecteur (10) selon la revendication 3, dans lequel l'élément (10) de corrosion est disposé selon une forme de serpentin ou de spirale.

5. Détecteur (1) selon la revendication 1, comprenant une pluralité d'éléments (10) de corrosion ayant une dimension de coupe transversale variable.

6. Détecteur (1) selon la revendication 1, dans lequel l'impédance caractéristique comprend une résistance électrique ou une impédance réactive.

7. Détecteur (1) selon la revendication 6, dans lequel l'élément (10) de corrosion est intégré dans un matériau isolé électriquement, de sorte que l'élément résistif de corrosion n'est pas en contact électrique avec lui-même.

8. Détecteur (1) selon la revendication 1, dans lequel au moins deux fils de détection (12a, 12b) sont reliés à l'élément de corrosion pour alimenter le détecteur en électricité.

9. Détecteur (1) selon la revendication 1, dans lequel le détecteur (1) est disposé sur une puce.

10. Détecteur (1) selon la revendication 1, dans lequel l'élément (10) de corrosion a au moins une dimension proportionnelle à une dimension de piqûre caractéristique d'un procédé métallurgique prédéterminé.

11. Détecteur (1) selon la revendication 1, dans lequel au moins une surface de l'élément (10) de corrosion possède une rugosité sensiblement analogue à la rugosité d'une surface interne d'une cuve où le détecteur est déployé.

12. Détecteur (1) selon la revendication 1, dans lequel au moins une surface de l'élément (10) de corrosion a sa rugosité augmentée.

13. Réseau de détecteurs selon la revendication 1, dans lequel les détecteurs (1) comprennent différents matériaux ou différents traitements de surface pour déterminer des mesures de corrosion ayant une large plage dynamique et de multiples procédés métallurgiques.

14. Réseau de détecteurs selon la revendication 13, dans lequel un premier détecteur (1) est un détecteur de référence et un second détecteur (1) est sensiblement analogue au premier détecteur, dans lequel le détecteur de référence n'est pas exposé à l'environnement corrosif alors que le second détecteur est exposé à l'environnement corrosif et dans lequel les deux détecteurs sont exposés à des conditions d'environnement sensiblement analogues et dans lequel le détecteur de référence compense les effets environnementaux.

15. Procédé de détermination d'une corrosion générale et d'une corrosion ciblée comprenant les étapes suivantes :

   (a) fournir au moins un détecteur (1) selon la revendication 1 ;
   (b) collecter des données concernant l'impédance de tous les segments (16) ; et
   (c) comparer les données d'impédance pour déterminer la corrosion générale et la corrosion ciblée sur ledit détecteur (1).

**FIG.1**

**FIG.2**

**FIG.2A**

**FIG.2B**

12a
12c
22
12f
12h
12j
12l
10
1
12b
12d
12g
12i
12k
10

**FIG.3**

1
12
12
10
12
10
12

**FIG.4**

**FIG.5A**

**Top View**

22

**(B)**

$16_2$  Side View  $16_3$

$16_1$  **(C)**

14

**Equivalent Circuit**

**(D)**

10mΩ  15mΩ  8mΩ

$R16_1$  $R16_2$  $R16_3$

**Estimated R**

60
50
40
R/m ohm
30
20
10
0

0    10    20    30    40

Pitting depth/um

**(E)**

**FIG.5B-E**

FIG.6A

FIG.6B

FIG.7

Field data analysis box

Wireless Comm.

Central Processor

Processing Algorithms

HMI    Data logger

FIG.8

RS

CS

LS

# FIG.1A

FIG.9A

# FIG.9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6922641 B